# EUROPEAN PATENT SPECIFICATION

(11) **EP 0 983 880 B1**
(45) Date of publication and mention of the grant of the patent: **09.04.2003**
(21) Application number: 99202855.5
(22) Date of filing: 02.09.1999
(51) Int. Cl.: B60D 1/06, B60D 1/60

(54) **Trailer coupling with lock**
Anhängerkupplung mit Schloss
Attelage de remorque avec serrure

(30) Priority: 04.09.1998 NL 1010010
(43) Date of publication of application: 08.03.2000
(73) Proprietor: Sanders, Teun Johan Hugo Leendert, 6862 WG Oosterbeek (NL)
(72) Inventor: Sanders, Teun Johan Hugo Leendert, 6862 WG Oosterbeek (NL)
(74) Representative: 't Jong, Bastiaan Jacob

(56) References cited:
- EP-A- 0 369 625
- EP-A- 0 628 436
- DE-C- 4 421 209
- GB-A- 1 347 233
- GB-A- 1 352 025
- NL-A- 9 002 357

## Description

The present invention relates to a trailer coupling which comprises a frame, according to the preamble of claim 1.

Such trailer couplings are generally known see e.g. document EP-A-0 628 436. The operating handle can be placed in a position in which the enclosing means can be placed over the coupling ball. The operating handle can then be swivelled into another position in which the enclosing means close non-releasably round the coupling ball. Such known trailer couplings are generally simple to use so that unauthorized persons can also release the coupling easily.

In order to reduce the risk of theft of the trailer provided with this coupling, it is known to apply lock means with which the trailer coupling can be locked in the situation where the coupling ball is fixedly enclosed. The coupling can then not be released from the coupling ball.

Partly due to the requirements laid down by insurance companies, known lock means are voluminous and awkward to handle. These known lock means are formed for instance by a padlock fitting closely round the coupling and fixing the operating handle. In addition to being awkward to use, these known lock means are expensive.

The invention now has for its object to provide a trailer coupling of the type specified in the preamble which has lock means which on the one hand are easy to handle and which on the other satisfy high standards of reliability.

This objective is achieved with the trailer coupling according to the invention as defined in claim 1. Standardized lock cylinders are relatively inexpensive due to large production numbers thereof. In addition, they can adequately withstand efforts to prise them open. The locking element movable by the control cam of the lock cylinder can be adapted in appropriate manner to the relevant coupling in order to achieve a reliable blocking of the operating handle.

An additional advantage is that the lock is integrated into the coupling and comprises no individual parts. Known lock means do comprise individual parts which can be mislaid.

Because use is made of standardized lock cylinders it is possible in simple manner to comply with the theft prevention requirements of insurance companies. When a higher degree of theft prevention is desired, a lock cylinder is used of a high theft prevention class.

In a favourable embodiment the locking element and the lock cylinder are mounted together in the operating handle.

In accordance with an advantageous further development the locking element is herein a slidable element which in the locking position engages behind an element connected fixedly to the frame. The lock means are then mounted in a manner well protected by the operating handle and can engage on the element connected fixedly to the frame at an advantageously great distance from the point of rotation of the operating handle.

A further favourable development is characterized in claim 4. The lock is hereby secured against the rotatable cylindrical part being pulled by force out of the lock cylinder. This is prevented by the wall in which the key insertion opening is formed.

A very favourable further development is characterized in claim 5. The cover element prevents the fastening bolt being accessible and thus prevents the possibility of this bolt being released in the locking position of the operating handle.

The invention will be further elucidated in the following description with reference to the annexed figures.
- Figure 1: shows a longitudinal section of a trailer coupling according to the invention in a preferred embodiment.
- Figure 2: shows a perspective view of a slightly different embodiment of the trailer coupling of figure 1.
- Figure 3: shows the trailer coupling of figure 2 in partly broken-away perspective view.

The trailer coupling shown in the figures is of the type as described in the Netherlands patent application 9002357. A coupling ball 3 arranged on a tractor vehicle is engaged clampingly by this coupling, thereby generating a resistance to movements of the trailer, which has a good influence on the stability of the trailer.

The coupling comprises a frame 1 in the form of a coupling housing which is fixedly connected by means of bolts 4 to a drawbar 2 of the trailer. Coupling ball 3 is enclosed between enclosing means 6, 8 which are provided with part-spherical recesses covered with friction material.

The foremost element is formed by a screw element 6 which is received adjustably in frame 1 by means of the screw thread. The other element takes the form of a lever 8 which can be loaded in forward direction by means of a lever 12. Lever 12 is pivotally mounted in housing 1 and is pushed forward into the engaging position of the coupling in a manner to be further described by means of a spring 19. Lever 12 engages on lever 8 through a first pair of co-acting protrusions 25, 26 and a second pair of co-acting protrusions 27, 28. The operation of these protrusions is further elucidated in the above mentioned Netherlands patent application. It will suffice for elucidation of the present invention to state that the further lever 12 is rotated in counter-clockwise direction, the further lever 8 is pushed forward by co-action of the protrusions in order to clamp ball 3 more fixedly.

An operating handle 15 engages pivotally on the top end of lever 12. Between a pin 18 connected fixedly to this operating handle 15 and a pin 20 connected fixedly to housing 1 is arranged a helical compression spring 19 which is enclosed in a spring sleeve 17. In the shown engaging position of the coupling the lever 12 is thus further loaded in counter-clockwise direction by the lever 15 under spring tension.

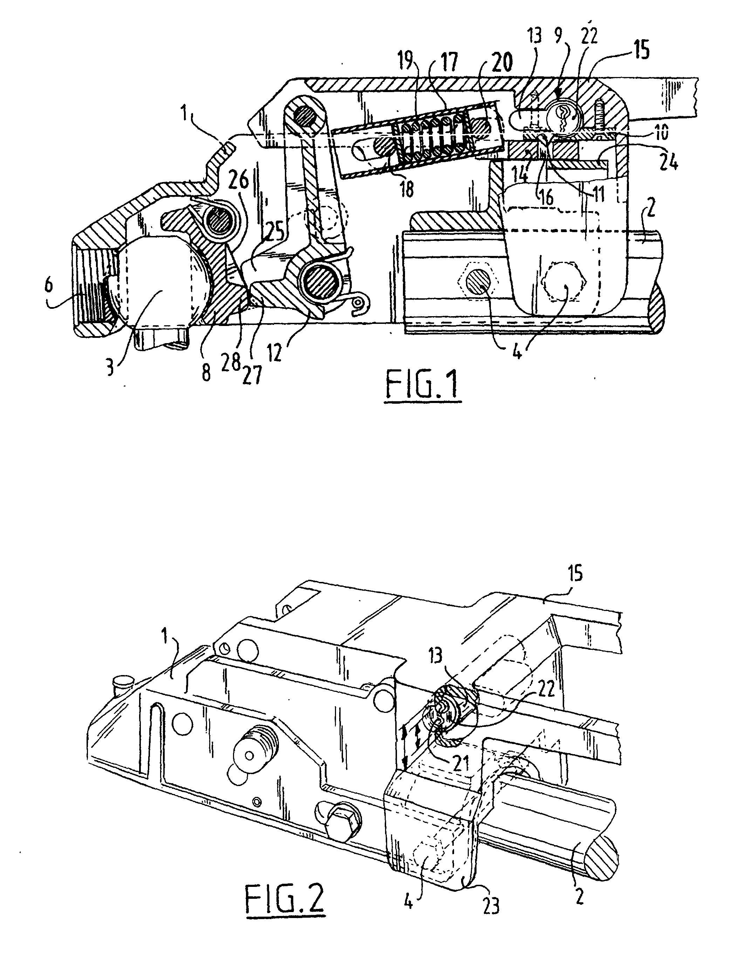

The trailer coupling shown in figure 1 is provided with lock means 9 according to the invention. These comprise a lock cylinder 13 mounted in operating handle 15 by means of a mounting plate 10. In the embodiment of the trailer coupling shown here lock cylinder 13 is a standardized profile cylinder such as is also applied in door locks. Other standardized lock cylinders can of course also be used instead of a profile cylinder.

The lock cylinder has in the usual manner a control cam 11 which is connected to a rotatable cylindrical part 22 of the lock cylinder. Cylindrical part 22 and the cam 11 connected thereto have one blocking position in which they are immovable relative to the housing of the lock cylinder and in which a key can be inserted into cylindrical part 22 and removed therefrom. This blocking position is shown in figure 1.

Lock means 9 further comprise a locking element 14 which is embodied here as a slidable plate which is likewise enclosed in operating handle 15 by means of a bracket 24. Slidable plate 14 is provided with a recess 16 into which control cam 11 can engage.

When cylindrical part 22 of lock cylinder 13 is rotated after insertion of a key therein, control cam 11 will displace locking plate 14. When the key is turned to the left the locking plate 14 will displace from the drawn position to the right. In the drawn locking position the locking plate 14 protrudes under the pin 20 fixedly connected to housing 1 so that operating handle 15 cannot be moved upward and the possibility of unintended release of the trailer coupling is thus prevented. In the releasing position of locking plate 14 displaced to the right, the plate leaves pin 20 free whereby operating handle 15 can be moved freely upward for release of the coupling.

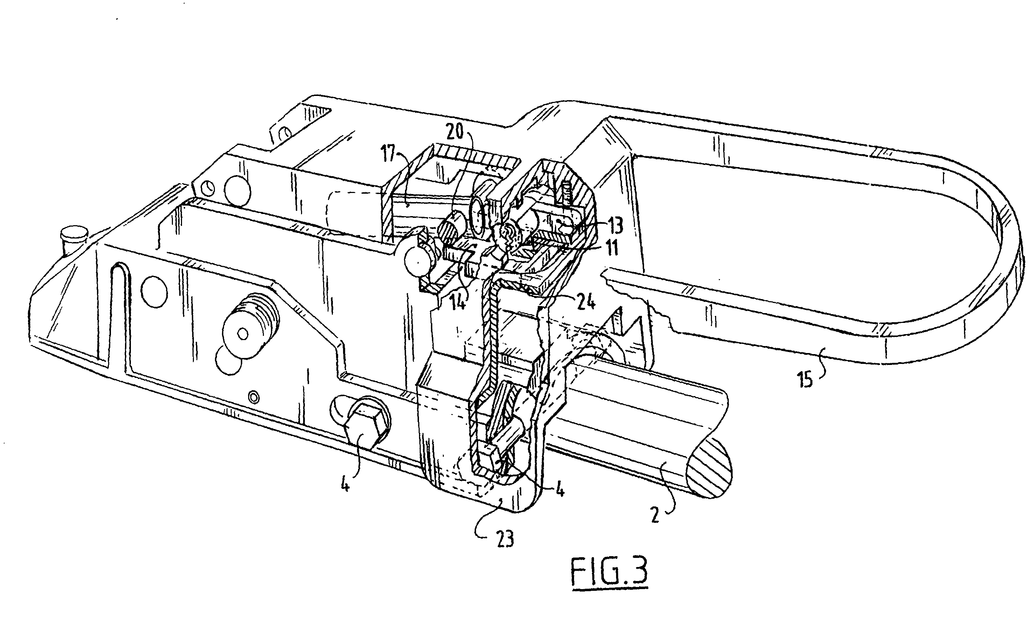

In the embodiment of figures 2 and 3 a slightly different lock cylinder 13 is applied which is mounted in a position rotated through a half-turn relative to figure 1. It will be apparent that the manner of mounting lock cylinder 13 is related to the position of control cam 11 in the blocking position of lock cylinder 13 and the manner in which the locking element co-acts with this control cam.

As shown in figure 2, lock cylinder 13 is mounted behind a key insertion opening 21 which has a smaller diameter than the diameter of the rotatable cylindrical part 22 of the lock cylinder. This difference in diameter is indicated with arrows in figure 2.

The rotatable cylindrical part 22 is hereby per se also enclosed in operating handle 15, so that the possibility of forcing lock cylinder 13 by pulling cylindrical part 22 therefrom using a pulling device is prevented. Another option is to arrange the insertion opening 21 in offset position or giving it a for instance oval form.

As the figures clearly show, operating handle 15 is provided with downward protruding cover plates 23 which in the drawn blocked position of the coupling cover one of the bolts 4 such that this bolt 4 becomes inaccessible. This makes it impossible to release the coupling from drawbar 2 by removing bolts 4.

The embodiment shown and described here is only one of many possibilities. As already noted above, lock cylinders other than profile cylinders can be used. The lock cylinder can moreover be built into the frame of the coupling instead of in operating handle 15, and the locking element can for instance be a rotatable element instead of a slidable plate.

In the shown embodiment lock means 9 also have an additional function as wear indicator for the friction covering in enclosing means 6, 8. When this covering becomes worn, in the engaging position of the coupling the operating handle will come to lie in a position shifted further to the left relative to figure 1. When wear is excessive the operating handle can no longer be moved into the locking position because it comes into contact with the housing or a fastening bolt. This is an indication to the user that the friction covering of enclosing means 6, 8 has become so worn that the coupling must be adjusted. The correct adjustment can once again be obtained by then screwing the screw element 6 further in or replacing it. Therefore, as long as lock means 9 can secure the operating handle the user can be sure that the good snake-damping action of the coupling according to this embodiment is achieved. Where mention is made here of friction covering on enclosing means 6, 8, it should also be understood that only lever 8 can be provided with friction material and screw element 6 can for instance be manufactured from bronze.

## Claims

1. Trailer coupling comprising a frame (1), enclosing means for a coupling ball (3) which are connected to the frame (1) and which are connected to an operating handle (15) mounted movably on the frame (1), wherein lock means (9) are arranged for locking the operating handle (15) in an engaging position relative to the frame (1), **characterized in that** the lock means (9) comprise a movable locking element (14) and a standardized lock cylinder (13) comprising a control cam (11) and having a blocking position and wherein the control cam (11) is in movable engagement with the locking element (14) for displacing thereof between a position locking the operating handle (15) and a position releasing said handle (15) and wherein the control cam (11) places the locking element (11) into the locking position in the blocking position of the lock cylinder.

2. Trailer coupling as claimed in claim 1, wherein the locking element (14) and the lock cylinder (13) are mounted together in the operating handle (15).

3. Trailer coupling as claimed in claim 2, wherein the locking element (14) is a slidable element which engages in the locking position behind an element fixedly connected to the frame.

4. Trailer coupling as claimed in any of the foregoing claims, wherein the lock cylinder (13) is mounted enclosed and behind a key insertion opening (21), wherein the key insertion opening (21) has a smaller diameter than the diameter of a rotatable cylindrical part of the lock cylinder (13).

5. Trailer coupling as claimed in any of the foregoing claims, wherein the frame (1) has at least one opening for placing through fastening bolts (4) for the coupling and wherein on the operating handle is formed at least one cover element (23) which is integrally formed therewith and which covers the opening in the engaging position.

## Patentansprüche

1. Anhängerkupplung mit einem Rahmen (1), Einschlußmitteln für eine Kupplungskugel (3), die mit dem Rahmen (1) verbunden sind und die mit einer bewegbaren, an dem Rahmen (1) montierten Betätigungshandhabe (15) verbunden sind, wobei Verschlußeinrichtungen (9) angeordnet sind zum Verschließen der Betätigungshandhabe (15) in einer Eingriffsstellung relativ zu dem Rahmen (1), **dadurch gekennzeichnet, daß** die Verschlußeinrichtungen (9) ein bewegliches Schließelement (14) umfassen und einen standardisierten Schließzylinder (13) mit einer Steuernocke (11) und eine Blockierstellung haben, und wobei sich die Steuernocke (11) in beweglichem Eingriff befindet mit dem Schließelement (14) zum Zwecke des Versatzes zwischen einer Stellung, in der es die Betätigungshandhabe (15) schließt und einer Stellung, in der die Handhabe (15) freigegeben ist, und wobei die Steuernocke (11) das Schließelement (14) in die Schließstellung plaziert in der Blockierstellung des Schließzylinders.

2. Anhängerkupplung nach Anspruch 1, bei welcher das Schließelement (14) und der Schließzylinder (13) zusammen in der Betätigungshandhabe (15) montiert sind.

3. Anhängerkupplung nach Anspruch 2, bei welcher das Schließelement (14) ein verschiebbares Element ist, das in der Schließstellung angreift hinter einem Element, das fest mit dem Rahmen verbunden ist.

4. Anhängerkupplung nach einem der vorstehenden Ansprüche, bei welcher der Schließzylinder (13) eingeschlossen und hinter einer Schlüsseleinführöffnung (21) montiert ist, wobei die Schlüsseleinführöffnung (21) einen kleineren Durchmesser aufweist als der Durchmesser eines drehbaren zylindrischen Teils des Schließzylinders (13).

5. Anhängerkupplung nach einem der vorstehenden Ansprüche, bei welcher der Rahmen (1) wenigstens eine Öffnung aufweist, um dort hindurch Befestigungsbolzen (4) für die Kupplung anzuordnen und wobei an der Betätigungshandhabe wenigstens ein Abdeckelement (23) ausgebildet ist, das integral damit ausgebildet ist und das die Öffnung in der Eingriffsstellung abdeckt.

## Revendications

1. Attelage de remorque comprenant un châssis (1), des moyens d'encerclage pour une boule d'attelage (3) qui sont reliés au châssis (1) et qui sont reliés à un manche d'actionnement (15) monté de manière mobile sur le châssis (1), dans lequel des moyens de verrouillage (9) sont disposés pour verrouiller le manche d'actionnement (15) dans une position de mise en prise par rapport au châssis (1), **caractérisé en ce que** les moyens de verrouillage (9) comprennent un élément de verrouillage mobile (14) et un barillet de serrure (13) normalisé comprenant une came de commande (11) et ayant une position de blocage, et pour lequel la came de commande (11) est en prise mobile avec l'élément de verrouillage (14) pour le déplacement de celui-ci entre une position verrouillant le manche d'actionnement (15) et une position libérant ledit manche (15) et dans lequel la came de commande (11) positionne l'élément de verrouillage (14) en position de verrouillage dans la position de blocage du barillet de serrure.

2. Attelage de remorque selon la revendication 1, dans lequel l'élément de verrouillage (14) et le barillet de serrure (13) sont montés ensemble dans le manche d'actionnement (15).

3. Attelage de remorque selon la revendication 2, dans lequel l'élément de verrouillage (14) est un élément coulissant qui vient en prise en position de verrouillage derrière un élément relié fixement au châssis.

4. Attelage de remorque selon l'une quelconque des revendications précédentes, dans lequel le barillet de serrure (15) est monté en étant encerclé et à l'arrière d'une ouverture pour insérer une clé (21), dans lequel l'ouverture pour insérer une clé (21) a un diamètre plus petit que le diamètre d'une partie cylindrique rotative du barillet de serrure (13).

5. Attelage de remorque selon l'une quelconque des revendications précédentes, dans lequel le châssis (1) a au moins une ouverture pour insérer des boulons de serrage (4) pour l'attelage et dans lequel sur le manche d'actionnement est formé au moins un élément de couverture (23) qui est formé d'un seul tenant avec celui-ci et qui recouvre l'ouverture en position de mise en prise.
